# EUROPEAN PATENT SPECIFICATION

(11) **EP 2 048 368 B1**
(45) Date of publication and mention of the grant of the patent: **31.08.2011**
(21) Application number: 08165907.0
(22) Date of filing: 06.10.2008
(51) Int. Cl.: F15B 1/26

(54) **Hydraulic fluid reservoir**
Behälter für Hydraulikflüssigkeit
Réservoir de fluide hydraulique

(30) Priority: 08.10.2007 SE 0702246
(43) Date of publication of application: 15.04.2009
(73) Proprietor: INAB Automation AB, 163 53 Spånga (SE)
(72) Inventor: Dahl, Thomas, 163 54 Spånga (SE); Frödin, Sten, 175 60 Järfälla (SE)
(74) Representative: Nikolopoulou, Sofia

(56) References cited:
- EP-A1- 0 530 685
- US-A- 5 918 760

## Description

### TECHNICAL AREA

This invention relates to a hydraulic fluid reservoir, comprising a generally rotational symmetric inner surface having a tangentially oriented inlet to cause a rotational motion in the reservoir when hydraulic fluid is flowing into the reservoir, and an outlet for the hydraulic fluid.

### BACKGROUND

In such hydraulic reservoir which is known from US 5918760 A, a larger pressure is created in the hydraulic fluid close to said inner surface by the rotational motion so that air bubbles in the liquid in an advantageous manner are transported to the center of the reservoir where they may rise to the liquid surface to deaerate the the fluid. Thereby, the air bubbles are prevented from reaching the outlet of the reservoir which is also tangentially oriented to the inner surface. Due to this forced deaeration, the reservoir can also be allowed to have a small volume which is advantageous, for example, in automotive applications. The rotation of the fluid also results in a certain increase of the outlet pressure which is advantageous for a good suction function, for example of a hydraulic pump in a hydraulic system communicating with the reservoir.

In the prior art hydraulic reservoirs of this type, however, the rotational center of the flow can be displaced from the center axis of the reservoir depending on the varying rate of the inflow, which may deteriorate the desired deaeration because the air bubbles then moves more irregularly in an unpredictable way in the reservoir.

The small volume also causes a problem for these hydraulic reservoirs to handle asymmetrical flows. i.e. instantaneous differences between inflow and outflow of the reservoir.

### DISCLOSURE OF THE INVENTION

An object with the invention is therefore to improve the deaertion capability and the ability to handle asymmetrical flows of a hydraulic reservoir of the kind defined in the introduction.

According to an aspect of the invention, the hydraulic reservoir has a screen at the inlet capable of guiding the inflow along the inner surface. Thereby, the inlet may be provided with a flattened cross section that forces the tangential inflow to extend in close proximity to the inner surface of the reservoir. Thereby, the fluid can be caused to rotate more centric in the reservoir so that also the deaeration of the fluid occurs more centric in the reservoir. The reservoir has further at least one opening to communicate hydraulic fluid between the reservoir and a buffer of hydraulic fluid. The reservoir may then also handle the asymmetric flows.

If the screen is yieldably influenced by a force as constant as possible in a direction towards the inner surface, it may serve as a valve that, for example, can be adapted to keep the flow rate of the inlet flow more or less constant independent of the volume flow

The screen may be forced by a spring. According to one embodiment the spring may comprise a leaf spring that then also forms the screen itself. A leaf spring may relatively easily be mounted at the inner surface in order to disturb the rotational flow as little as possible in the reservoir.

While the leaf spring may be mounted in many different ways at the inlet, in one embodiment it is tensioned by inherent spring force against the inner surface. The spring leaf may then also be located in a peripheral groove in the inner surface.

The above mentioned opening is preferably concentrically located in a top end wall that closes the rotational symmetric reservoir. The opening at the same time serves to guide the separated air bubbles out of the reservoir.

A corresponding opening may also be provided in an opposite bottom end wall of the reservoir. Such opening has proven the ability of leading out smaller air bubbles that are not lead out from the top opening. Thereby, the deaeration capability may thus be further improved.

The hydraulic reservoir may also comprise a container for said buffer of hydraulic fluid. While the container may be connected to the reservoir in different ways, for example by a tube to one or both of the openings in the reservoir, the container, in one embodiment is adapted to enclose the reservoir. The reservoir may then in a suitable manner be mounted within the container, spaced from the walls thereof so that it is entirely enclosed by the buffer fluid in the container.

A separating wall may be provided between the inlet and the outlet, the separating wall partly separates an inlet chamber from an outlet chamber in the reservoir. Such separating wall may have a stabilizing effect on the circulating flow in the reservoir.

Particularly, the separating wall may generally have the shape of a circle sector in the rotational symmetric reservoir.

The screen may have a height that corresponds to the height of the inlet chamber. Thereby, it may be provided that the full inflow of hydraulic fluid into the reservoir is forced to follow the rotational symmetric inner surface of the reservoir.

Other features and advantages of the invention may be apparent from the claims and the following description of embodiments.

### BRIEF DESCRIPTION OF THE DRAWING

FIG. 1 is a view of a prior art hydraulic reservoir having an open top end;
FIG. 2 is a view corresponding to FIG. 1 of a hydraulic reservoir according to the invention;
FIG. 3 is an enlarged view with parts broken away and showing an inlet of a reservoir according to FIG. 2;
FIG. 4 is a view with parts broken away and showing an alternatively formed inlet of a reservoir according to the invention;
FIG. 5 is a view with parts broken away and showing another alternatively formed inlet of a reservoir according to the invention;
FIG. 6 is a view with parts broken away and showing still another alternatively formed inlet of a reservoir according to the invention;
FIG. 7 is a view corresponding to FIG. 2 of an alternative embodiment of a reservoir according to the invention; and
FIG. 8 is a diagrammatic view of a hydraulic system incorporated with a reservoir according to the invention.

In the drawing, parts having similar function are consistently referenced by same numerals.

### DETAILED DESCRIPTION OF EMBODIMENTS

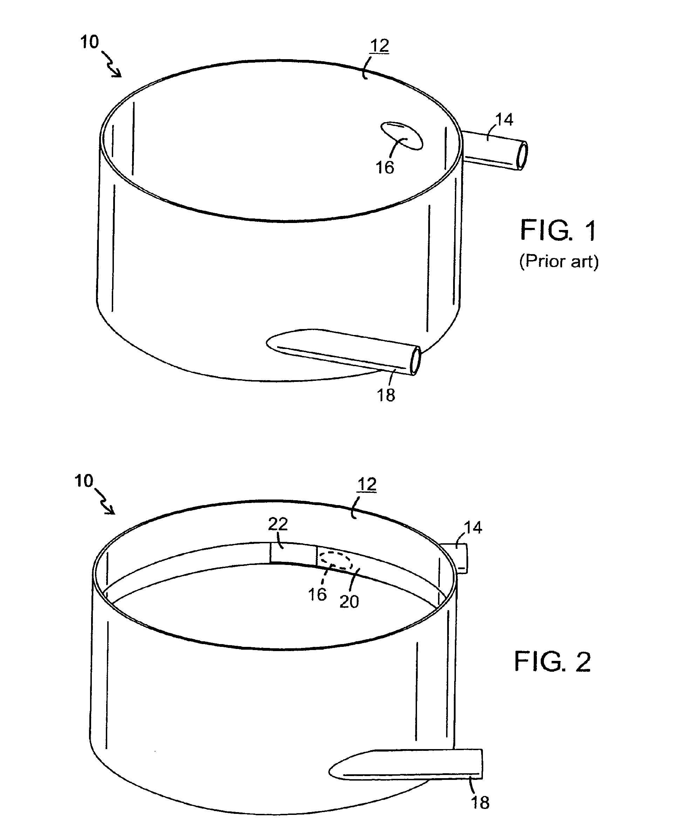

The hydraulic reservoirs 10 shown in FIG. 1 and 2 are shaped with a rotationally symmetric or circular cylindrical vertical inner surface 12. The reservoirs also has respective inlet and outlet pipe ends 14 and 18, which are oriented such that their inlet 16 and outlet (not shown) are tangentially oriented in relation to the inner surface 12. Such reservoir 10 may then function as a cyclone to centrally separate air bubbles that may enter into hydraulic fluid brought into motion in the reservoir 10. By this cyclone action the air bubbles are forced to the lower pressure in the rotational center of the liquid and are thereby prevented from reaching the peripheral, lower outlet 18 and from entering a hydraulic system, not shown, communicating with the reservoir 10.

Each hydraulic reservoir 10 according to the invention is provided with a screen 20 at the inlet 16 to guide inflow of hydraulic liquid/fluid through the inlet 16 along the inner surface 12. While the screen can be configured in many different ways according to the invention, in the embodiment of FIGS. 2-4 the screen is a leaf spring 20 that closes the outlet 16 when the pressure in the inlet pipe end 14 is low.

When the pressure in the inlet pipe end 14 is higher than the pressure in the reservoir 10 by a constructional defined value, the screen 20 opens and allows liquid to flow into the reservoir 10 by a high predetermined velocity.

As indicated in FIG. 2, the leaf spring 20 can be located in a peripheral groove 22 in the inner surface 12 an extend more or less around the inner surface. By its inherent spring action, leaf spring is capable of keeping itself in position against the bottom of groove 22. Many variants are possible. Groove 22 can, for example, have lips or shoulders (not shown) that prevent the spring 20 from moving out of place in the peripheral direction. Leaf spring may, of course, also be firmly connected to the inner surface 12, for example by spot welding.

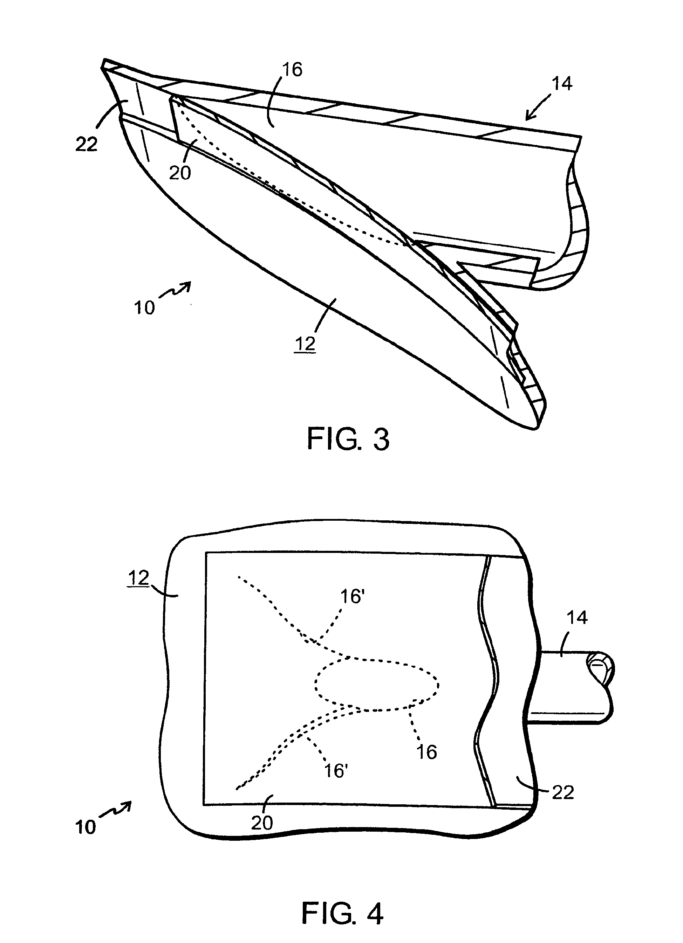

FIG. 4 illustrates the option of using a wide leaf spring 20 that is capable of imposing a flattened, wide, slit-shaped cross section to the inflow of hydraulic fluid into the reservoir 10. Inlet 16 may then also be shaped with delimiting surfaces 16' diverging in the flow direction to facilitate the formation of a wide, flattened inflow of hydraulic fluid into the reservoir 10.

FIG. 4 also indicates that the depth of groove 22 may gradually decrease in the peripheral direction so that the groove 22 is discontinued approximately at the inlet 16. Also the leaf spring 20 may have a narrowing thickness towards the free spring end thereof at the inlet 16.

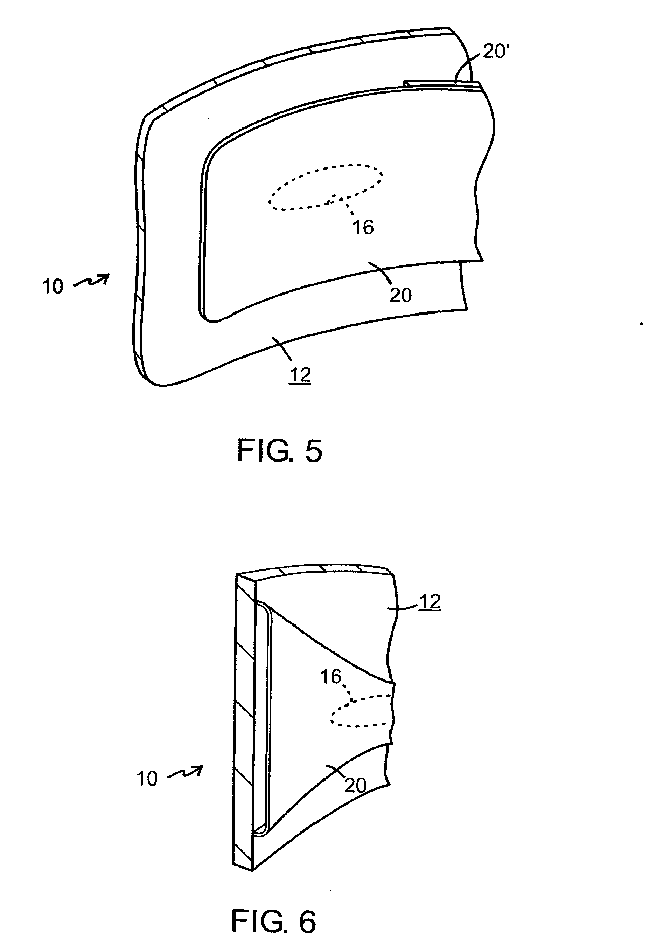

FIG. 5 shows a screen 20 provided at a distance from the inner surface and the inlet 12 by a spacing element 20'. The spacing element 20 may then be a leaf spring that allows the screen to be distanced from the inner surface on increasing volume flow and pressure in the hydraulic fluid flowing into the reservoir 10 from inlet 16. The spacing element 20' may alternatively be shaped on secured to the inner surface 12. In this latter case the screen 20 may as previously also be a leaf spring.

Many variants are possible. As shown in FIG. 6, the width of screen 20 can increase in the direction of flow and its lateral edges may me angled towards the inner wall 12 to prevent inflow in the axial direction. In a manner not shown, screen 20 may in principle also extend over the full height of the reservoir 10.

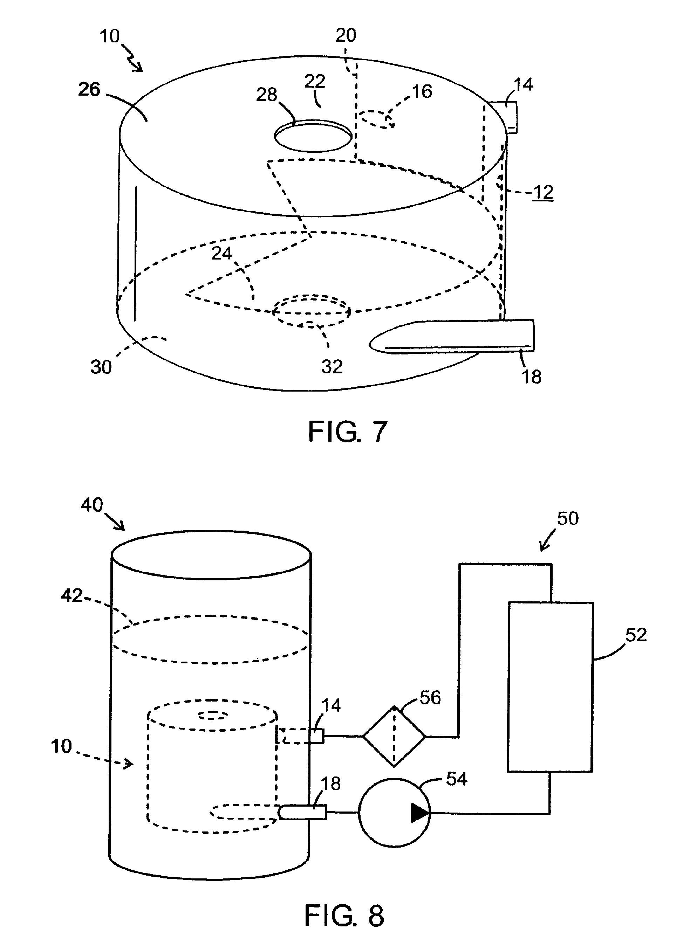

FIG. 7 shows an alternative embodiment of a hydraulic reservoir 10 according to the invention. In this embodiment, reservoir 10 is provided with a separating wall 24 between inlet 14 and outlet 18 to define an inlet chamber and an outlet chamber. As shown in the example, the separating wall 24 that partly separates the inlet 14 from the outlet 18, may comprise a circle sector disk that extends radially in the reservoir space in connection with the inner surface 12 of the reservoir 10.

The separating wall 24 has shown to stabilize the circulating flow in the reservoir 10. Together with a top end wall 26, the separating wall 24 can also be adapted to keep the screen 20 in place in the inlet chamber. For example, if the screen is a leaf spring 20 the opposite rear end portions of the leaf spring 20 in a suitable manner can be clamped to the inner surface 12 of reservoir 10 by the top end wall 26 and the separating wall 24.

In the embodiment of FIG. 7, openings 28, 32 are also shown in the above mentioned top end wall 26 and in an opposite bottom end wall 30, which end walls close the two opposite ends of reservoir 10.

While it may be sufficient by having only one opening, for example in the top end wall 26 only, there are accordingly two openings in the embodiment shown. In case only one opening 26 is provided in the top wall, opening 26 can be connected with a buffer of hydraulic fluid (not shown), for example by a hose. In the example shown, the reservoir 10 is intended to be submerged in a buffer 42 of hydraulic fluid in the manner that is diagrammatically shown in FIG. 8. Buffer 42 is held in a container 40 for the reservoir 10 to be capable of handling asymmetric flows. In a manner not shown, reservoir 10 can be mounted centrally in the container 40, spaced from the enclosing walls thereof. Such asymmetric flows are present when consumers 52, not shown in detail, of a hydraulic system 50 connected to the reservoir 10, of different causes at each point of time do not return the same amount of hydraulic fluid as that drawn from the outlet 18. The buffer 42 then ensures that the level of hydraulic fluid in container 40 is always above the reservoir 10. The openings 28, 32 communicate the fluid between the reservoir 10 and the container 40, whereby fluid can be drawn into the reservoir 10 when the outflow through the outlet 18 is larger than the inflow through the inlet 16 and whereby fluid can flow out of the reservoir 10 when the outflow through the outlet 18 is smaller than the inflow through the inlet 16. The one or both openings 28, 32 also serve as an outlet for the air bubbles that are separated in the reservoir 10. It has been shown that the lower opening 32 is capable of allowing allow particularly smaller air bubbles, that are not separated in the upper portion of the reservoir and that do not exit the upper opening 28, to exit the lower opening 32. By the flow in the reservoir, apart from having a concentric primary flow, also has a superposed secondary flow, the resulting flow will follow an inward directed spiral path that carries the air bubbles to the center of the reservoir. As previously, the large bubbles in the resulting flow will rise upwards and exit the reservoir through the upper opening 28. At least a portion of the small bubbles is supposed to gather in the center of the bottom of the reservoir (like tiny tea leaf fragments that gather in the bottom center of a teacup when the liquid is stirred, in accordance with the phenomenon described inter alia by A. Einstein in "Die Ursache der Mäanderbildung der Flußläufe und des sogenannten Baerschen Gesetzes", Die Naturwissenschaften, 1926, 11, p. 223-224) where they then may exit through the lower opening 32.

The foregoing detailed description is given primarily for clearness of understanding and no unnecessary limitations are to be understood therefrom. Modifications will become obvious to those skilled in the art upon reading this disclosure and may be made without departing from the spirit of the invention or the scope of the appended claims.

## Claims

1. A hydraulic fluid reservoir (10) comprising a generally rotational symmetric inner surface (12) having a tangentially oriented inlet (16) to cause a rotational motion in the reservoir when hydraulic fluid is flowing into the reservoir, and an outlet (18) for the hydraulic fluid, **characterized by**
a screen (20) at the inlet (16) capable of guiding the inflow along the inner surface (12); and
an opening (28, 32) to communicate the hydraulic fluid between the reservoir (10) and a buffer (42) of hydraulic fluid.

2. A hydraulic fluid reservoir according to claim 1, wherein the screen (20) is provided as a valve at the inlet (16).

3. A hydraulic fluid reservoir according to claim 1 or 2, wherein the screen (20) is yieldably influenced in a direction toward the inner surface (12).

4. A hydraulic fluid reservoir according to claim 3, wherein the screen (20) is forced by a spring.

5. A hydraulic fluid reservoir according to claim 4, wherein the screen (20) comprises a leaf spring (20, 20').

6. A hydraulic fluid reservoir according to claim 5, wherein the leaf spring (20) is tensioned by inherent spring force towards the inner surface (12)

7. A hydraulic fluid reservoir according to claim 5 or 6, wherein the leaf spring (20) is located in a peripheral groove (22) of the inner surface (12).

8. A hydraulic fluid reservoir according to any of the previous claims, wherein the screen (20) is located at a distance from the inlet (16).

9. A hydraulic fluid reservoir according to any of the previous claims, wherein the opening (28, 32) is provided in an end wall (26, 30) that closes the reservoir (10).

10. A hydraulic fluid reservoir according to claim 9, wherein the opening (28, 32) is provided in each of a pair of opposite end walls (26, 30) of the reservoir (10).

11. A hydraulic fluid reservoir according to any of the previous claims, comprising a container (40) for said buffer (42) of hydraulic fluid, said container enclosing the reservoir (10).

12. A hydraulic fluid reservoir according to any of the previous claims, comprising a separating wall (24) between the inlet (14) and the outlet (18), said separating wall partly separating an inlet chamber from an outlet chamber in the reservoir (10).

13. A hydraulic fluid reservoir according to claim 9, wherein the separating wall (24) has substantially the shape of a circle sector in the rotational symmetric reservoir (10).

14. A hydraulic fluid reservoir according to any of the previous claims, wherein the screen (20) has a height corresponding to the height of the inlet chamber.

## Patentansprüche

1. Behälter (10) für Hydraulikfluid, welcher eine im Allgemeinen rotationssymmetrische Innenfläche (12) umfasst, die einen tangential orientierten Einlass (16) aufweist, um eine Rotationsbewegung in dem Behälter zu bewirken, wenn Hydraulikfluid in den Behälter fließt, und einen Auslass (18) für das Hydraulikfluid aufweist, **gekennzeichnet durch**:
einen Schirm (20) am Einlass (16), welcher das einfließende Fluid an der Innenfläche (12) entlang leiten kann; und
eine Öffnung (28, 32), um das Hydraulikfluid zwischen dem Behälter (10) und einem Hydraulikfluidpuffer (42) auszutauschen.

2. Behälter für Hydraulikfluid nach Anspruch 1, wobei der Schirm (20) als ein Ventil am Einlass (16) bereitgestellt ist.

3. Behälter für Hydraulikfluid nach Anspruch 1 oder 2, wobei der Schirm (20) biegsam in eine Richtung auf die Innenfläche (12) hin zu bringen ist.

4. Behälter für Hydraulikfluid nach Anspruch 3, wobei der Schirm (20) von einer Feder angedrückt wird.

5. Behälter für Hydraulikfluid nach Anspruch 4, wobei der Schirm (20) eine Blattfeder (20, 20') umfasst.

6. Behälter für Hydraulikfluid nach Anspruch 5, wobei die Blattfeder (20) durch die eigene Federkraft in Richtung der Innenfläche (12) unter Spannung gehalten wird.

7. Behälter für Hydraulikfluid nach Anspruch 5 oder 6, wobei die Blattfeder (20) in einer umlaufenden Nut (22) der Innenfläche (12) angeordnet ist.

8. Behälter für Hydraulikfluid nach einem der vorhergehenden Ansprüche, wobei der Schirm (20) in einem Abstand von dem Einlass (16) angeordnet ist.

9. Behälter für Hydraulikfluid nach einem der vorhergehenden Ansprüche, wobei die Öffnung (28, 32) in einer Abschlusswand (26, 30) bereitgestellt ist, welche den Behälter (10) schließt.

10. Behälter für Hydraulikfluid nach Anspruch 9, wobei die Öffnung (28, 32) in jeder Wand eines Paars gegenüber liegender Abschlusswände (26, 30) des Behälters (10) bereitgestellt ist.

11. Behälter für Hydraulikfluid nach einem der vorhergehenden Ansprüche, welcher ein Gefäß (40) für den Hydraulikfluidpuffer (42) umfasst, wobei das Gefäß den Behälter (10) umschließt.

12. Behälter für Hydraulikfluid nach einem der vorhergehenden Ansprüche, welcher eine Trennwand (24) zwischen dem Einlass (14) und dem Auslass (18) umfasst, wobei die Trennwand teilweise eine Einlasskammer von einer Auslasskammer in dem Behälter (10) trennt.

13. Behälter für Hydraulikfluid nach Anspruch 9, wobei die Trennwand (24) im Wesentlichen die Form eines Kreisabschnitts in dem rotationssymmetrischen Behälter (10) aufweist.

14. Behälter für Hydraulikfluid nach einem der vorhergehenden Ansprüche, wobei der Schirm (20) eine Höhe aufweist, welche der Höhe der Einlasskammer entspricht.

## Revendications

1. Réservoir de fluide hydraulique (10) comprenant une surface intérieure généralement symétrique en rotation (12) présentant une entrée (16) orientée de façon tangentielle pour entraîner un mouvement de rotation dans le réservoir quand du fluide hydraulique s'écoule dans le réservoir, et une sortie (18) pour le fluide hydraulique, **caractérisé par**
un écran (20) au niveau de l'entrée (16) capable de guider l'afflux le long de la surface intérieure (12) ; et
une ouverture (28, 32) pour faire communiquer le fluide hydraulique entre le réservoir (10) et un tampon (42) de fluide hydraulique.

2. Réservoir de fluide hydraulique selon la revendication 1, dans lequel l'écran (20) est fourni en tant que vanne au niveau de l'entrée (16).

3. Réservoir de fluide hydraulique selon la revendication 1 ou 2, dans lequel l'écran (20) est influencé de façon élastique dans une direction vers la surface intérieure (12).

4. Réservoir de fluide hydraulique selon la revendication 3, dans lequel l'écran (20) est contraint par un ressort.

5. Réservoir de fluide hydraulique selon la revendication 4, dans lequel l'écran (20) comprend un ressort à lames (20, 20').

6. Réservoir de fluide hydraulique selon la revendication 5, dans lequel le ressort à lames (20) est tendu par une force de ressort inhérente vers la surface intérieure (12).

7. Réservoir de fluide hydraulique selon la revendication 5 ou 6, dans lequel le ressort à lames (20) est situé dans une rainure périphérique (22) de la surface intérieure (12).

8. Réservoir de fluide hydraulique selon l'une quelconque des revendications précédentes, dans lequel l'écran (20) est situé à une distance de l'entrée (16).

9. Réservoir de fluide hydraulique selon l'une quelconque des revendications précédentes, dans lequel l'ouverture (28, 32) est fournie dans une paroi d'extrémité (26, 30) qui ferme le réservoir (10).

10. Réservoir de fluide hydraulique selon la revendication 9, dans lequel l'ouverture (28, 32) est fournie dans chacune d'une paire de parois d'extrémité opposées (26, 30) du réservoir (10).

11. Réservoir de fluide hydraulique selon l'une quelconque des revendications précédentes, comprenant un conteneur (40) pour ledit tampon (42) de fluide hydraulique, ledit conteneur renfermant le réservoir (10).

12. Réservoir de fluide hydraulique selon l'une quelconque des revendications précédentes, comprenant une paroi de séparation (24) entre l'entrée (14) et la sortie (18), ladite paroi de séparation séparant partiellement une chambre d'entrée d'une chambre de sortie dans le réservoir (10).

13. Réservoir de fluide hydraulique selon la revendication 9, dans lequel la paroi de séparation (24) présente sensiblement la forme d'un secteur de cercle dans le réservoir symétrique en rotation (10).

14. Réservoir de fluide hydraulique selon l'une quelconque des revendications précédentes, dans lequel l'écran (20) présente une hauteur correspondant à la hauteur de la chambre d'entrée.
